(19) Europäisches Patentamt
European Patent Office
Office européen des brevets

(11) Numéro de publication: **0 340 216 B1**

# (12) FASCICULE DE BREVET EUROPEEN

(45) Date de publication de fascicule du brevet: **19.05.93**

(51) Int. Cl.[5]: **A01N 57/20**, A01N 57/22, //(A01N57/20,41:08,39:02), (A01N57/22,41:08,39:02)

(21) Numéro de dépôt: **87907233.8**

(22) Date de dépôt: **28.10.87**

(86) Numéro de dépôt internationale :
**PCT/FR87/00423**

(87) Numéro de publication internationale :
**WO 89/03641 (05.05.89 89/10)**

Le dossier contient des informations techniques présentées postérieurement au dépôt de la demande et ne figurant pas dans le présent fascicule.

## (54) COMPOSITIONS COMPRENANT DES COMBINAISONS D'HERBICIDES DE TYPE GLYPHOSATE ET DE TYPE PHENOXYBENZOIOUE.

(43) Date de publication de la demande:
**08.11.89 Bulletin 89/45**

(45) Mention de la délivrance du brevet:
**19.05.93 Bulletin 93/20**

(84) Etats contractants désignés:
**AT BE CH DE FR GB IT LI LU NL SE**

(56) Documents cités:
**EP-A- 0 143 547**
**EP-A- 0 144 137**
**EP-A- 0 192 583**
**WO-A-84/03607**
**US-A- 4 364 767**

(73) Titulaire: **RHONE-POULENC AGROCHIMIE**
**14-20, rue Pierre Baizet**
**F-69009 Lyon(FR)**

(72) Inventeur: **DECOR, Jean-Pierre Chemin de la Croix-Blanche**
**Soucieu-en-Jarret**
**F-69510 Thurins(FR)**
Inventeur: **BORROD, Guy**
**38 bis, rue des Granges**
**F-69005 Lyon(FR)**

(74) Mandataire: **Brachotte, Charles et al**
**RHONE-POULENC AGROCHIMIE DPI BP 9163**
**F-69263 Lyon Cedex 09 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

La présente invention concerne des compositions herbicides nouvelles à base d'un herbicide de type glyphosate et d'un herbicide de type phénoxybenzoïque. Elle concerne également un procédé de traitement de végétaux indésirables au moyen de ces compositions. Le glyphosate (ou N-phosphonométhylglycine), et ses sels sont des herbicides à large spectre bien connus actifs contre les mauvaises herbes annuelles et vivaces. Cette classe d'herbicides est notamment connue pour son efficacité en post-levée et est utilisée pour les applications agricoles et pour les activités de jardin. Il est néanmoins toujours souhaitable d'améliorer l'activité herbicide de ces composés.

Il est cependant connu que les herbicides de type glyphosate agissent relativement lentement. Un délai d'environ trois semaines est en effet généralement nécessaire avant de constater les effets.

Afin de remédier à cet inconvénient, la demande de brevet PCT WO 84/03607, dans le cas particulier de l'application aux jardins d'amateurs, indique que l'addition d'une certaine quantité d'acifluorfen ou d'un de ses sels aux herbicides de type glyphosate accroît la vitesse d'action des herbicides de type glyphosate. Dans ce cadre, une quantité efficace d'herbicide de type glyphosate est utilisée et l'acifluorfen est ajouté de manière que le rapport pondéral soit compris pratiquement entre 1/8,33 et 4,2. On constate cependant que les compositions décrites révèlent dans de nombreux cas un antagonisme marqué, ce qui a pour conséquence de nuire à l'efficacité de l'herbicide de type glyphosate. On a aussi proposé d'utiliser des mélanges extemporanés de glyphosate et d'acifluorfen . contre des mauvaises herbes, non pas de jardins mais de grandes cultures, comme le soja. C'est ainsi que la publication Proceedings, Southernweeds Science Society, 38th annual meeting, Sanberg et collaborateurs, 1985, pages 86 à 89 indique qu'une dose de 430 g/ha de glyphosate associée à 70 g/ha d'acifluorfen révèle un antagonisme marqué contre les mauvaises herbes testées, cet antagonisme diminuant d'ailleurs lorsque le rapport glyphosate/acifluorfen diminue, c'est-à-dire lorsque l'on augmente la quantité d'acifluorfen.

Une seconde publication, Ibid, pages 64-67, Frost et collaborateurs, confirme également le fait qu'il est nécessaire d'augmenter la dose d'acifluorfen .

On constate également d'après cette dernière publication que le spectre d'activité du glyphosate est réduit, notamment contre les graminées.

Un autre inconvénient lié au mode d'action du glyphosate ou de ses dérivés réside dans le fait qu'il est très facilement lessivable. C'est-à-dire que, si une forte pluie survient quelques heures après son application, il est en grande partie éliminé. Il est également souhaitable d'améliorer l'action des herbicides de type glyphosate sur les plantes dont la croissance est ralentie par les températures basses et/ou une humidité faible, ou sur les plantes en fin de cycle végétatif.

De manière inattendue, la présente invention permet de remédier à ces inconvénients et, plus particulièrement, permet d'atteindre un ou plusieurs des buts suivants :

- accroître la vitesse d'action des herbicides de type glyphosate.
- améliorer le spectre d'activité des herbicides de type glyphosate.
- améliorer les propriétés herbicides des herbicides de type glyphosate.
- éviter le lessivage des herbicides de type glyphosate.
- améliorer l'activité des herbicides de type glyphosate sur les plantes dont la croissance est ralentie par les températures basses et/ou une humidité faible ou sur les plantes en fin de cycle végétatif.

Selon la présente invention, la composition herbicide comprend au moins un herbicide de type glyphosate (I) et au moins un herbicide de type phénoxybenzoïque (VIII) et est caractérisée en ce que le rapport pondéral (VIII)/(I) est compris entre 1/12 et 1/80, de préférence entre 1/15 et 1/50.

Cela équivaut à un rapport molaire (VIII)/(I), en tenant compte de l'équivalence molaire ramenée à l'acide pour (I) aussi bien que pour (VIII), compris entre 1,2/12 et 1,2/80 et de préférence entre 1,2/15 et 1,2/50.

### DESCRIPTION DETAILLEE DE L'INVENTION

#### Herbicides de type glyphosate

Les herbicides de type glyphosate qui peuvent être utilisés dans la présente invention sont des composés répondant aux formules I et Ia ci-dessous, ainsi que leurs métabolites et dérivés. Lesdits composés sont définis par les formules I et Ia ci-dessous :

$$O=\underset{OR^2}{\overset{OR^1}{P}}-CH_2-NH-CH_2-Z \qquad (I)$$

dans laquelle

Z est un groupe cyano ou COOR ;

R est un atome d'hydrogène ou bien est choisi entre les groupes alkyle inférieur, alcényle inférieur ou alkoxy-alkyle inférieur ; aryle renfermant 6 à 10 atomes de carbone et portant facultativement 1 à 3 substituants choisis indépendamment entre les groupes alkyle inférieur, alkoxy inférieur, halogéno, trifluorométhyle, nitro et cyano ; ou bien est un cation compatible, capable de former un sel ;

$R^1$ et $R^2$ sont identiques ou différents, étant des atomes d'hydrogène ou étant choisis entre des groupes alkyle inférieur, aryle, aryle substitué, biphényle ; ou bien étant des cations compatibles capables de former des sels.

$$O = \underset{OR^4}{\overset{OR^3}{P}} - CH_2 - \overset{Z^{2-}}{\underset{+}{N}}H_2 - CH_2 - Z^1 \qquad (Ia)$$

dans laquelle

$Z^2$ est un anion compatible, capable de former un sel ;

$R^3$ et $R^4$ sont identiques ou différents et représentent des atomes d'hydrogène ou des groupes alkyle inférieur ou aryle, pouvant être substitués, ou

biphényle ;

$Z^1$ est un groupe cyano ou $COOR^5$ ;

$R^5$ peut avoir les mêmes définitions que celles données pour R, sauf en ce qui concerne un cation.

Dans les formules I et Ia, les composés appréciés sont ceux dans lesquels Z et $Z^1$ sont respectivement des groupes COOR et $COOR^5$. En ce qui concerne la formule (I), les composés appréciés sont ceux dans lesquels R, $R^1$ et $R^2$, identiques ou différents, sont des atomes d'hydrogène ou des cations compatibles. Des sels organiques d'ammonium répondant à la formule (I), notamment ceux dans lesquels R est un cation dérivé de l'isopropylamine, donnent de bons résultats et sont disponibles dans le commerce. Des sels organiques de sulfonium ou de sulfoxyde (par exemple ceux dans lesquels $R^1$ et/ou $R^2$ sont le cation triméthylsulfonium ou triméthylsulfoxyde) conviennent également. Un exemple d'un composé répondant à la formule I ou Ia est le sel d'isopropylamine de la N-(phosphonométhyl) glycine qui est l'ingrédient actif dans l'herbicide mis sur le marché par Monsanto sous le nom commercial de Roundup.

En ce qui concerne la formule Ia, les composés appréciés sont ceux dans lesquels $R^3$ et $R^4$, identiques ou différents, représentent des groupes alkyle inférieur ou aryle, et dans lesquels $Z^1$ est un groupe $COOR^5$, $R^5$ étant un groupe alkyle inférieur ou aryle.

Les cations et anions compatibles d'un point de vue herbicide sont des cations ou anions faisant partie d'un sel de formule I ou Ia qui n'altèrent pas les propriétés herbicides du composé. La forme saline est généralement plus soluble dans l'eau et plus avantageuse que l'acide libre ou la base libre correspondant.

Des exemples de cations compatibles comprennent des cations de métaux alcalins comme le sodium ou le potassium, des cations de métaux alcalino-terreux, comme le calcium ou le magnésium; des cations de cuivre, de zinc, de fer, de nickel, de manganèse, d'ammonium ou d'ammonium organiques, de phosphonium, de sulfonium ou de sulfoxyde, ces cations ayant de préférence un poids moléculaire inférieur à 300. Les cations organiques d'ammonium convenables comprennent des dérivés d'amines, notamment des amines aliphatiques, cycliques ou hétérocycliques ayant 1 ou 2 groupes amine, comme des alkylamines, des alkylèneamines, des alcénylamines et des alcanolamines. Des exemples de dérivés d'amines comprennent, , la méthylamine, l'éthylamine, la n-propylamine, l'isopropylamine, la n-butylamine, l'isobutylamine, la sec.-butylamine, la n-amylamine, l'iso-amylamine, l'hexylamine, l'heptylamine, l'octylamine, la nonylamine, la décylamine, l'undécylamine, la dodécylamine, la tridécylamine, la tétradécylamine, la pentadécylamine, l'hexadécylamine, l'heptadécylamine, l'octadécylamine, la méthyléthylamine, la méthylisopropylamine, la méthylhexylamine, la méthylnonylamine, la méthylpentadécylamine, la méthyloctadécylamine, l'éthylbutylamine, l'éthylheptylamine, l'éthyloctylamine, l'hexylheptylamine, l'hexyloctylamine, la diméthylamine, la diéthylamine, la di-n-propylamine, la diisopropylamine, la di-n-amylamine, la diisoamylamine, la dihexylamine, la diheptylamine, la dioctylamine, la triméthylamine, la triéthylamine, la tri-n-propylamine, la triisopropylamine, la tri-n-butylamine, la triisobutylamine, la tri-sec.-butylamine, la tri-n-amylamine, la n-propanolamine, l'isopropanolamine, la diéthanolamine, la N,N'-diéthyléthanolamine, la N-éthylpropanolamine, la N-butyléthanolamine, l'allylamine, la n-buténynl-2-amine, la n-penténynl-2-amine, la 2,3-diméthylbutényl-2-amine, la dibutényl-2-amine, la n-hexényl-2-amine et la propylènediamine, des amines aromatiques primaires, comme l'aniline, la méthoxyaniline, l'éthoxyaniline, l'ortho-, la méta- et la para-toluidine, la phénylènediamine, la 2,4,6-tribromoaniline, la benzidine, la naphtylamine, l'ortho-, la méta- et la para-chloraniline, etc. ; des amines hétérocycliques comme la pyridine, la morpholine, la pipéridine, la pyrrolidine, l'indoline, et l'azépine.

Parmi les cations organiques de sulfonium et de sulfoxyde convenables, se trouvent des cations d'alkyle en $C_1-C_{10}$ (de préférence d'alkyle inférieur en $C_1-C_5$)-sulfonium et des cations d'alkyle en $C_1-C_{10}$ (de préférence d'alkyle inférieur)-sulfoxyde, comme le triméthylsulfonium, l'éthyldiméthylsulfonium, le tripropylsulfonium, le triméthylsulfoxyde, le triéthylsulfoxyde, etc. Ces sels sont décrits en particulier dans le brevet des Etats-Unis d'Amérique N° 4 315 765. Les cations de phosphonium convenables comprennent, ceux représentés par la formule

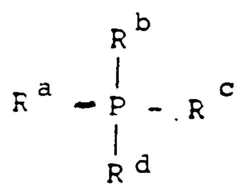

dans laquelle $R^a$, $R^b$ et $R^c$ , identiques ou différents, représentent des radicaux phényle ou alkyle en $C_1$ à $C_{10}$, de préférence alkyle inférieur. Ces sels sont décrits dans le brevet des Etats-Unis d'Amérique N° 4 341 549. D'autres exemples de cations convenables sont décrits dans le brevet des Etats-Unis d'Amérique N° 3 799 758. Des anions compatibles convenables comprennent, les anions chlorure, bromure, fluorure, sulfate, sulfite, bisulfite, phosphate, orthophosphate, carbonate, bicarbonate, acétate, butyrate, benzoate, et maléate.

Les composés de formules (I) et (Ia) sont décrits, par exemple, dans les brevets des Etats-Unis d'Amérique N° 3 799 758, 3 835 000, 3 950 402, 4 067 719, 4 008 296, 4 147 719 et 4 369 142.

Un grand nombre de composés métabolisés par les végétaux verts ou fonctionnant d'une manière équivalente à celle de la partie active (d'un point de vue phytotoxique) du glyphosate peut également être utilisé. Ces composés comprennent, par exemple, les composés représentés par les formules I et Ia, ainsi que par les formules suivantes.

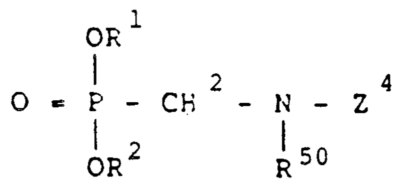

(II)

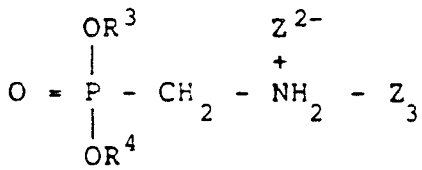

(IIb)

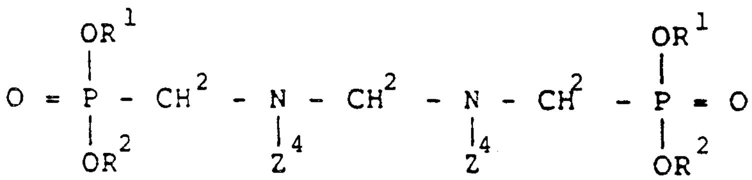

(III)

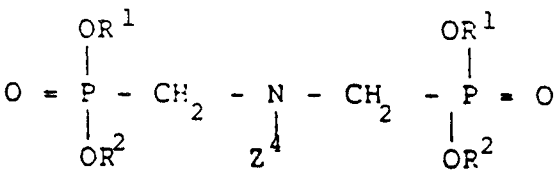

(IV)

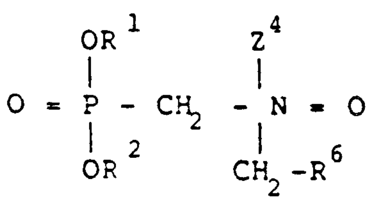

(V)

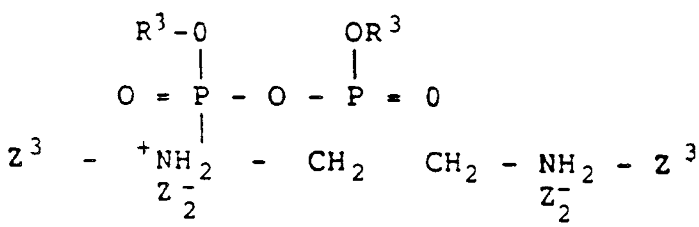

(VI)

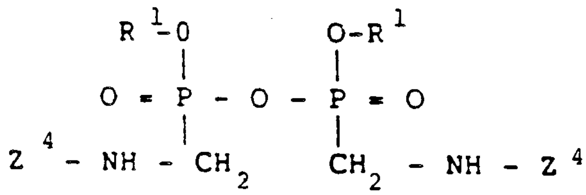

(VII)

dans lesquelles :

$Z^2$, $R^1$, $R^2$, $R^3$ et $R^4$ répondent aux définitions précitées ;

$Z^4$ est un groupe $CH_2CN$ ; CO NH OH (ou sa forme tautomère $-C(OH) = N OH$) ; $CH_2$ COOR, dans lequel R a la signification mentionnée précédemment ; CO $NR^7R^8$, dans lequel $R^7$ et $R^8$, identiques ou différents, possèdent également les mêmes significations que celles données pour R ;

$Z^3$ est un groupe $-CH_2-CN$ ; $-CO-NHOH$ (ou sa forme tautomère $-C(OH) - NOH$) ; $-CH_2$ ; $-$

$COOR^5$ ou $-CO\ NR^5R^5$ dans laquelle les différents groups $R^5$, identiques ou différents l'un de l'autre, possèdent l'une des significations mentionnées précédemment.
$R^{50}$ est un groupe alkyle inférieur, alkoxy inférieur, hydroxy, alcanoyle inférieur, arylcarbonyle facultativement substitué, trifluoracétyle, alkylthio inférieur, alcanoyle inférieur ; amino, alkylamino, nitro, nitroso ou un radical $-COOR^9$, $-OCH$ ; $COOR^{10}$, $-CH_2P(O)\ OR^{15}\ (OR^{25})$, $-S(O)m-R^{11}$, $-\ SO-X-R^{11}$ ou $-CO-S-(O)m-R^{12}$, dans lequel $R^9$ est un groupe alkyle inférieur, alcényle inférieur, aryle facultativement substitué, $R^{11}$ est un groupe alkyle inférieur ou aryle facultativement substitué ; X représente $-O-$ ou $-S-$; $R^{12}$ est choisi entre les groupes alkyle inférieur, alcényle inférieur, alcynyle inférieur, aryle facultativement substitué ; arylalkyle (inférieur), facultativement substitué ; m est égal à 0, 1 ou 2; $R^{15}$, $R^{25}$ et $R^{10}$ possèdent les mêmes significations que celles mentionnées ci-dessus pour $R^1$, $R^6$ est un atome d'hydrogène ou un groupe alkyle inférieur ; un groupe aryle facultativement substitué ; aryle inférieur facultativement substitué ; arylalkyle inférieur facultativement substitué ; un groupe $COOR^5$ ou $-P\ (O)\ (OR^3)\ (OR^4)$ dans lequel $R^3$, $R^4$ et $R^5$ répondent aux définitions précitées.

Les produits répondant aux formules II à VII ci-dessus sont en général connus et peuvent être préparés par des procédés connus ou bien des procédés similaires à des procédés connus. Ces produits et procédés sont décrits dans les brevets des Etats-Unis d'Amérique N° 4 035 177, 4 175 946, 4 251 258, 4 231 782, 4 322 238, 4 322 239, 4 323 387, 4 300 942, 4 300 943 ; le mémoire descriptif de recherche des Etats-Unis d'Amérique N° 220 001 (Derwent N° 73821 E/35) ; le brevet du Royaume-Unis N° 2 090 596 ; le brevet belge N° 888 001 ; les brevets japonais N° 56139408, 57120595 et 57099597 ; la publication européenne N° 39 310 ; et la demande de brevet de la République Fédérale d'Allemagne N° 2 361 382.

Les dérivés (phénoxysubstitué) benzoïques sont choisis parmi l'acifluorfen, le sel de potassium ou de sodium de l'acifluorfen ; l'acifluorfen-sodium est préféré.

Conformément à la présente invention, les compositions agrochimiques nouvelles peuvent contenir des mélanges de matières actives et d'ingrédients classiques connus dans la pratique, comme des surfactants, des supports et des diluants. Si la composition contient deux substituants, l'herbicide systémique et le dérivé phénoxy-benzoïque, ou plus de deux substituants, il est souhaitable que les compositions précitées soient mélangées convenablement, de manière homogène et/ou uniforme, mélange auquel on peut parvenir au moyen d'une agitation particulière. Les compositions peuvent être mélangées en cuve ou prémélangées, en particulier prémélangées.

La présente invention concerne également un procédé de desherbage consistant à appliquer une quantité efficace d'une composition herbicide à des plantes qui doivent être détruites. Ce procédé de traitement est à but destructif, permettant en particulier la maîtrise de la croissance de mauvaises herbes et, éventuellement, leur anéantissement total ou partiel.

Les compositions herbicides ou mélanges de matières actives, tels qu'ils ont été décrits ci-dessus et sont utilisables conformément à la présente invention, sont appliqués de manière convenable aux feuilles des végétaux et, en particulier, aux mauvaises herbes à éliminer, par exemple, lorsque ces dernières présentent un feuillage vert.

Les compositions herbicides peuvent également être appliquées peu de temps avant la récolte afin de tuer les mauvaises herbes dont les racines persistent dans le sol après la récolte. Il est ainsi possible de planter peu de temps après la récolte sans avoir à effectuer des opérations mécaniques de désherbage (manuelles ou d'une autre manière). Cependant, ce procédé est réservé aux cas dans lesquels les herbicides appliqués ne sont pas rémanents et/ou sont sélectifs vis-à-vis de la culture à planter après la récolte.

En général, le composé systémique de type glyphosate est appliqué aux plantes à des doses de 0,3 à 0,9 kg/ha, de préférence d'environ 0,4 à environ 0,8 kg/ha et notamment d'environ 0,5 à environ 0,7 kg/ha.

Le composé de type phénoxy benzoïque est utilisé comme une substance chimique modifiant les membranes ; une dose, comprise avantageusement entre 0,005 et 0,1 kg/ha et, de préférence, entre 0,02 et 0,08 kg/ha, est appliquée.

Le rapport pondéral herbicide de type phénoxybenzoïque/herbicide de type glyphosate est compris entre 1/12 et 1/80, de préférence entre 1/15 et 1/50.

Au moyen des compositions de la présente invention, on observe une lutte efficace contre les mauvaises herbes suivantes :
Dicotylédones : Xanthium, Ipomoea, Sesbania, Abutilon, Polygonum, Amaranthus, Chenopodium, Sinapis, Datura, Solanum, Euphorbia, Bidens, Galinsoga.
Monocotylédones : (graminées) Setaria, Echinochloa.

Le procédé conforme à la présente invention rend possible la lutte contre un large spectre de mauvaises herbes annuelles et vivaces, monocotylédones ou dicotylédones. Les mauvaises herbes peut

être détruites par les procédés et les compositions de la présente invention, permettant une bonne mise en état du terrain pour le développement ultérieur de cultures telles que les céréales, le blé, le riz, le coton, le soja, les betteraves (notamment les betteraves à sucre), le tournesol, le colza, la canne à sucre, les cultures légumières, ainsi que pour l'obtention d'un désherbage efficace des cultures vivaces (vignes, vergers).

Le procédé et la composition conformes à la présente invention rendent également possible une lutte rapide contre des plantes, notamment des mauvaises herbes, l'effet herbicide devenant apparent et efficace peu de temps après le traitement (beaucoup plus tôt qu'avec l'herbicide de type glyphosate seul (lors de l'utilisation à des doses supérieures)).

Le procédé conforme à la présente invention permet également d'éviter le lessivage du glyphosate ou de ses dérivés. L'invention a également pour objet un procédé permettant d'éviter le lessivage du glyphosate ou de l'un de ses dérivés répondant à la formule (I) précitée, ledit procédé étant caractérisé en ce qu'il consiste à appliquer le glyphosate ou l'un de ses dérivés de formule (I) en association avec un composé de type phénoxy benzoique, selon les doses et les rapports pondéraux définis précédemment.

Lorsque le procédé de la présente invention est mis en pratique, les compositions herbicides contiennent le plus souvent un ou plusieurs ingrédients autres que les composés de type glyphosate et leurs dérivés (appelés ci-après ingrédients actifs). Ces compositions, qui peuvent être utilisées comme agents herbicides, contiennent les ingrédients actifs en association avec les supports solides ou liquides acceptables en agriculture et les agents tensio-actifs acceptables en agriculture. Des supports inertes courants et des agents tensio-actifs courants peuvent être utilisés. Ces compositions font également partie de la présente invention.

Ces compositions peuvent également contenir d'autres ingrédients, comme des colloïdes protecteurs, des adhésifs, des épaississants, des agents thixotropes, des agents facilitant la pénétration, des activateurs, des stabilisants, des agents séquestrants, etc., ainsi que d'autres ingrédients actifs connus ayant des propriétés pesticides (en particulier des insecticides, des fongicides ou des herbicides) ou ayant des propriétés régulatrices de croissance des plantes. Plus généralement, les compositions utilisées dans la présente invention peuvent contenir tous les additifs solides ou liquides correspondant aux procédés habituels de formulation.

Dans la description suivante de la présente invention, les pourcentages sont exprimés sur une base pondérale, sauf spécification contraire.

Les activateurs sont des composés qui sont normalement non herbicides aux doses normales (0,5 à 5 kg/ha) mais qui présentent une aptitude à accroître notablement l'activité herbicide des composés de type glyphosate. La plupart de ces activateurs sont bien connus. Certains activateurs sont des surfactants, tels qu'ils sont décrits ci-après, notamment des dérivés polyéthoxylés de phénol, d'alcool ou d'amines. Certains activateurs sont des sels d'ammonium, notamment des chlorures, des sulfates, des phosphates inorganiques ou organiques d'ammonium. D'autres activateurs peuvent être utilisés. La quantité d'activateurs utilisée dans les compositions de la présente invention peut être comprise entre 0,1 % et 500 % de la quantité du composé de type glyphosate, et de préférence entre 50 et 350 %. Ce pourcentage dépend de la nature particulière des activateurs utilisés.

Les doses de composés utilisés dans la présente invention peuvent varier dans des larges limites, en particulier suivant la nature des plantes à supprimer et/ou du degré d'infestation des cultures par les mauvaises herbes.

En général, les compositions conformes à la présente invention contiennent habituellement 0,05 à 95 % d'un ou plusieurs ingrédients actifs conformes à la présente invention, 1 à 95 % d'un ou plusieurs supports solides ou liquides et, facultativement, 0,1 à 50 % d'un ou plusieurs agents tensio-actifs.

De préférence, les compositions renferment 10 % à 50 % en poids de l'ensemble des deux matières actives de formules (I) et (VIII), de préférence 15 % à 30 %.

Conformément à ce qui a été mentionné précédemment, les ingrédients actifs utilisés dans la présente invention sont généralement associés à des supports et, facultativement, des agents tensio-actifs.

Dans la description de l'invention, le terme "support" désigne un ingrédient organique ou inorganique, naturel ou synthétique, auquel les ingrédients actifs sont associés afin de faciliter l'application à la plante, aux graines ou au sol. Ce support est donc généralement inerte et il doit être acceptable en agriculture, en particulier vis-à-vis de la plante traitée. Le support peut être solide (argiles, silicates naturels ou synthétiques, silice, résines, cires, engrais solides, etc.) ou liquide (eau, alcools, en particulier le butanol) ; esters, en particulier l'acétate de méthylglycol ; cétones, en particulier la cyclohexanone et l'isophorone ; fractions pétrolières ; hydrocarbures paraffiniques ou aromatiques, en particulier les xylènes ; hydrocarbures aliphatiques chlorés, en particulier le trichloréthane, ou hydrocarbures aromatiques chlorés, en particulier les chlorobenzènes ; solvants hydrosolubles, comme le diméthylformamide, le diméthylsulfoxyde ou la N-méthylpyrrolidone ; gaz liquéfiés, etc.

L'agent tensio-actif peut être un agent émulsionnant, un agent dispersant ou agent mouillant du type ionique ou non ionique ou bien un mélange de ces agents tensio-actifs. Des exemples comprennent des sels d'acides polyacryliques, des sels d'acides lignosulfoniques, des sels d'acides phénolsulfoniques ou naphtalènesulfoniques, des produits de polycondensation d'oxyde d'éthylène avec des alcools gras, des acides gras ou des amines grasses, des phénols substitués (en particulier des alkylphénols ou des arylphénols), des sels d'esters d'acide sulfosuccinique, des dérivés de la taurine (en particulier des taurates d'alkyle), des esters phosphoriques d'alcools ou de produits de polycondensation d'oxyde d'éthylène avec des phénols, des esters d'acides gras avec des polyols, et des dérivés à fonctionnalité sulfate, sulfonate et phosphate des composés ci-dessus. La présence d'au moins un agent tensio-actif est généralement appréciée.

Pour leur application, les ingrédients actifs utilisés dans la présente invention sont généralement sous forme de compositions. Ces compositions conformes à la présente invention sont par elles-mêmes sous différentes formes solides ou liquides. Des formes des compositions de la présente invention comprennent des poudres hydrosolubles (ayant une teneur en ingrédients actifs capable d'atteindre 80 %) et des granules hydrosolubles, en particulier ceux obtenus par extrusion, compactage, imprégnation d'un support granulaire, ou bien granulation en partant d'une poudre (la teneur en ingrédients actifs dans ces granules étant comprise entre 0,5 et 80 % dans ces derniers cas), et des solutions aqueuses.

Les solutions ou concentrés hydrosolubles (notamment poudres ou granules) comprennent également le plus souvent 5 à 80 % d'ingrédients actifs, tandis que les émulsions ou solutions qui sont prêtes à l'application contiennent généralement 0,01 à 20 % d'ingrédients actifs. En plus du solvant, les solutions ou concentrés peuvent contenir 2 à 50 % d'additifs convenables, comme des stabilisants, des agents tensio-actifs, des agents facilitant la pénétration, des inhibiteurs de corrosion, des colorants ou des adhésifs.

Des émulsions à n'importe quelle concentration requise, qui conviennent particulièrement pour l'application aux plantes, peuvent être obtenues à partir de ces concentrés par dilution avec de l'eau.

Toutes ces dispersions ou solutions ou mélanges aqueux pour pulvérisation peuvent être appliqués aux plantes des cultures à désherber par n'importe quel moyen convenable, par exemple par pulvérisation, aux taux qui sont généralement de l'ordre de 100 à 1200 litres de mélange de pulvérisation par hectare.

Les compositions conformes à la présente invention sont convenablement appliquées à la végétation et, en particulier, aux mauvaises herbes à éliminer lorsque ces dernière présentent un feuillage vert.

Les exemples non limitatifs suivants illustrent la présente invention et la manière dont son application peut être effectuée en pratique.

<u>Exemple 1 : Application de la composition herbicide après la levée de différentes espèces de plantes</u> (en serre).

Des pots de 7 x 7 x 8 cm sont remplis de sable meuble pour cultures, et un certain nombre de graines, suivant la fonction de l'espèce de plante et l'épaisseur de la graine, est planté.

On recouvre ensuite les graines d'une couche de terre d'environ 3 mm d'épaisseur, et on laisse les graines germer jusqu'à ce qu'elles donnent naissance à une pousse à un stade convenable. Le stade de traitement pour les plantes du type graminée est le stade de la "formation de la deuxième feuille". Le stade de traitement des dicotylédones est le stade de "déploiement des cotylédons, et de développement de la première vraie feuille".

Les pots sont ensuite traités par pulvérisation d'une quantité correspondant à une dose d'application, en volume, de 500 l/ha, contenant les matières actives à leurs concentrations désirées. Le mélange pour pulvérisation contient un mélange pour cuve préparé en mélangeant :

- de l'eau,
- une solution aqueuse à 240 g/l d'acifluorfen-sodium (la concentration en g/l, ainsi que les doses en g/ha, concerne la forme acide de l'acifluorfen),
- une solution aqueuse à 360 g/l de sel d'isopropylammonium de la N-phosphonométhylglycine (qui est la forme acide du glyophosate ; la concentration en g/l ainsi que les doses en g/ha, concernent la forme acide), qui contient également 15 % de surfactant du type dérivé polyéthoxylé.

Différentes concentrations des matières actives du liquide de pulvérisation sont utilisées, correspondant à différentes doses des matières actives appliquées.

Les pots traités sont ensuite placés dans des bacs destinés à recevoir de l'eau d'irrigation par subirrigation, et ils sont maintenus à température ambiante pendant 24 jours à une humidité relative de 70 %.

A 13 et 29 jours après traitement , on compte le nombre de plantes vivantes dans les pots traités par le liquide de pulvérisation contenant la matière active à tester, et on compte également le nombre de plantes

vivantes dans un pottémoin traité suivant les mêmes conditions mais au moyen d'un liquide de pulvérisation ne contenant pas de matières actives. Le pourcentage égal à 100 % indique qu'il y a une destruction totale de l'espèce de plante considérée, et un pourcentage égal à 0 % indique que le nombre de plantes vivantes dans le pot traité est identique à celui dans le pot-témoin.

Les espèces de plantes utilisées dans l'exemple 1 sont : le liseron pourpre (Ipomoea purpurea) et le pourpier potager (Portulaca oleracea).

Les tests effectués mettent en évidence l'effet herbicide remarquablement précoce des compositions conformes à la présente invention pour des traitements en post-levée. (voir les tableaux I, II en fin de description).

Exemple 2 : Expérimentation en champ

Le champ a été divisé en parcelles de 5 mètres carrés. Plusieurs espèces ont été semées dans chaque parcelle, en rangées distantes de 15 cm. Ces espèces comprenaient les monocotylédones suivantes :

Folle avoine : Avena fatua (AVEFA)
Panic pied-de-coq : Echinochloa crus-galli (ECHCG)
Ray-grass : Lolium multiflorum (LOLMU)
Millet proso : Panicum miliaceum (PANMI)

et les mauvaises herbes dicotylédones suivantes :

Amarante réfléchie : Amaranthus retroflexus (AMARE)
Moutarde des champs : Sinapis arvensis (SINAR)

Lorsque toutes les plantes ont atteint au moins le stade 2-3 feuilles, c'est-à-dire environ trois semaines après le semis, des traitements ont été appliqués en préparant des mélanges pour cuves d'ingrédients actifs à des concentrations convenables et en les pulvérisant sur les rangs de plantes à un volume de 500 l par hectare afin d'obtenir les taux adéquats. Une parcelle non traitée était placée en contiguité avec chaque parcelle traitée à titre de comparaison et de notation. Les notations ont été effectuées à plusieurs intervalles après le traitement et sont exprimées en pourcentages de destruction de chaque espèce, comparativement à la même espèce dans une parcelle non traitée.

L'effet herbicide est observé 5 jours après traitement. Les mêmes ingrédients actifs et doses que dans l'exemple précédent ont été utilisés. Un effet herbicide précoce remarquable a été observé comme indiqué au tableau III en fin de description.

Dans cet exemple une pluie (20 mm d'eau) lessivait les plantes 15 heures après traitement.

## Table I

| adventice and dates of treatment | glyphosate doses g/ha | no acifluorfen | acifluorfen : 10 g/ha | | | |
|---|---|---|---|---|---|---|
| | | | Ipomoea | | Portulaca | |
| | | | T+13 | T+29 | T+13 | T+29 |
| | | | 0 | 0 | 10 | 10 |
| Ipomoea | 125 | | | | | |
| T+13 | | 0 | 0 | /////// | /////// | /////// |
| T+29 | | 0 | /////// | 0 | /////// | /////// |
| Portulaca | 125 | | | | | |
| T+13 | | 0 | /////// | /////// | 80 | /////// |
| T+29 | | 10 | /////// | /////// | /////// | 80 |
| Ipomoea | 250 | | | | | |
| T+13 | | 0 | 20 | /////// | /////// | /////// |
| T+29 | | 0 | /////// | 20 | /////// | /////// |
| Portulaca | 250 | | | | | |
| T+13 | | 0 | /////// | /////// | 98 | /////// |
| T+29 | | 20 | /////// | /////// | /////// | 95 |

Table II

| adventice and dates of treatment | glyphosate doses g/ha | no acifluorfen | acifluorfen : 20 g/ha | | | |
|---|---|---|---|---|---|---|
| | | | Ipomoea | | Portulaca | |
| | | | T+13 | T+29 | T+13 | T+29 |
| | | | 0 | 0 | 20 | 10 |
| Ipomoea | 125 | | | | | |
| T+13 | | 0 | 0 | /////// | /////// | /////// |
| T+29 | | 0 | /////// | 80 | /////// | /////// |
| Portulaca | 125 | | | | | |
| T+13 | | 0 | /////// | /////// | 90 | /////// |
| T+29 | | 10 | /////// | /////// | /////// | 90 |
| Ipomoea | 250 | | | | | |
| T+13 | | 0 | 98 | /////// | /////// | /////// |
| T+29 | | 0 | /////// | 80 | /////// | /////// |
| Portulaca | 250 | | | | | |
| T+13 | | 0 | /////// | /////// | 100 | /////// |
| T+29 | | 20 | /////// | /////// | /////// | 100 |

Table III

| Active Ingredients | Doses g/ha | AVEFA | ECHCG | LOIMU | PANMI | AMARE | SINAR |
|---|---|---|---|---|---|---|---|
| acidfluorfen sodium | 50 | 9 | 7.5 | 6.5 | 7.5 | 25 | 22.5 |
| mixture of glyphosate salt formulations and acidfluorfen sodium solutions. | 200 + 5 | 27.5 | 35 | 37.5 | 37.5 | 60 | 40 |
| | 400 + 5 | 70 | 67.5 | 62.5 | 67.5 | 70 | 65 |

## Revendications

1. Composition herbicide comprenant au moins un herbicide de type glyphosate selon la formule I

$$O = \underset{\displaystyle OR^2}{\overset{\displaystyle OR^1}{P}} - CH^2 - NH - CH_2 - Z \qquad (I)$$

dans laquelle Z est un groupe cyano ou COOR;
R est un atome d'hydrogène ou bien est choisi entre les groupes alkyle inférieur, alcényle inférieur et alkoxy – alkyle inférieur; aryle renfermant 6 à 10 atomes de carbone et portant facultativement 1 à 3 substituants choisi indépendamment entre les groupes alkyle inférieur, alkoxy inférieur, halogéno,

trifluorométhyl, nitro et cyano; ou bien est un cation compatible, capable de former un sel; $R^1$ et $R^2$ sont identiques ou différentes, étant des atomes d'hydrogène ou étant choisi entre les groupes alkyle inférieur, aryle, aryle substitué, biphényle ou bien étant des cations compatibles, capable de former des sels;
ou bien l'herbicide de type glyphosate selon la formule Ia

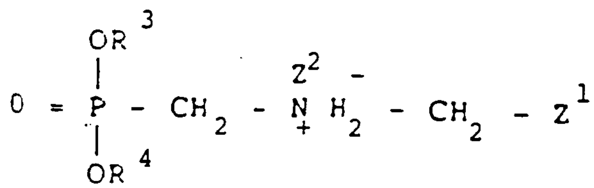

(Ia)

dans laquelle $Z^2$ est un anion compatible, capable de former un sel;
$R^3$ et $R^4$ sont identiques ou différentes et représentent des atomes d'hydrogène ou des groupes alkyle inférieur ou aryle, pouvant être substitués ou biphényle;
$Z^1$ est un groupe cyano ou $COOR^5$;
$R^5$ est un atome d'hydrogène ou bien est choisi entre les groupes alkyle inférieur, alcényle inférieur et alkoxy-alkyle inférieur; aryle renfermant 6 à 10 atomes de carbone et portant facultativement 1 à 3 substituants choisi indépendamment entre les groupes alkyle inférieur, alkoxy inférieur, halogéno, trifluorométhyl, nitro et cyano;
et au moins un herbicide de type phénoxybenzoïque choisi parmi l'acifluorfen, le sel de potassium ou de sodium de l'acifluorfen, **caractérisée en ce que** le rapport pondéral herbicide de type phénoxybenzoïque/herbicide de type glyphosate est compris entre 1/12 et 1/80.

**2.** Composition suivant la revendication 1, **caractérisée en ce que** le rapport pondéral herbicide de type phénoxybenzoïque/herbicide de type glyphosate est compris entre 1/15 et 1/50.

**3.** Composition suivant la revendication 1 ou 2, **caractérisée en ce que** le composé de type phénoxy-benzoïque est l'acifluorfen-sodium.

**4.** Composition suivant l'une des revendications 1 à 3, caractérisée en ce qu'elle est sous la forme d'un mélange prêt à l'emploi.

**5.** Procédé de traitement des mauvaises herbes en post-levée, consistant à appliquer sur celles-ci une quantité efficace d'un herbicide de type glyphosate et une quantité d'un herbicide de type phénoxy-benzoïque suivant l'une des revendications 1 à 4, caractérisé en ce que la dose herbicide de type glyphosate est comprise entre 0,3 et 0,9 kg/ha, de préférence entre 0,4 et 0,8 kg/ha et avantageusement entre 0,5 et 0,7 kg/ha, **et la** dose d'herbicide de type phénoxybenzoïque est comprise entre 0,005 et 0,1 kg/ha, de préférence entre 0,02 et 0,08 kg/ha, **le rapport** pondéral herbicide de type phénoxybenzoïque/herbicide de type glyphosate étant compris entre 1/12 et 1/80, de préférence entre 1/15 et 1/50.

**6.** Composition à base d'un herbicide de type glyphosate à bonne résistance au lessivage par la pluie, notamment lorsqu'elle est présente sur des feuilles de végétaux, caractérisée en ce qu'elle est conforme à l'une quelconque des revendications 1 à 4.

**7.** Composition à base d'un herbicide de type glyphosate à forte activité à l'égard des végétaux en fin de cycle végétatif et/ou à croissance ralentie, caractérisée en ce qu'elle est conforme à l'une quelconque des revendications 1 à 4.

**8.** Composition suivant l'une quelconque des revendications 1 à 4, destinée à être diluée dans l'eau en vue de son application sur des végétaux, caractérisée en ce qu'elle comprend 10 % à 50 % en poids de l'ensemble des deux matières actives de formule (I) et de type phenoxybenzoïque, de préférence 15 à 30 %.

## Claims

1. Herbicidal composition including at least one herbicide of the glyphosate type according to formula I

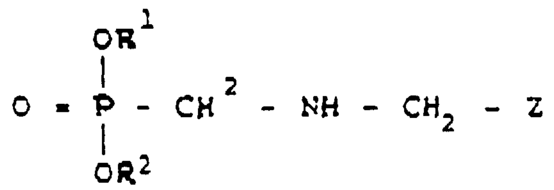

(I)

in which Z is a cyano group or a group COOR;
R is a hydrogen atom or else is chosen from the lower alkyl, lower alkenyl and lower alkoxyalkyl groups; aryl groups containing 6 to 10 carbon atoms and optionally carrying 1 to 3 substituents chosen independently from the lower alkyl, lower alkoxy, halo, trifluoromethyl, nitro and cyano groups; or else is a compatible cation, capable of forming a salt;
$R^1$ and $R^2$ are identical or different and are hydrogen atoms or are chosen from the lower alkyl, aryl, substituted aryl or biphenyl groups or else are compatible cations, capable of forming salts;
or else the herbicide of the glyphosate type according to formula Ia

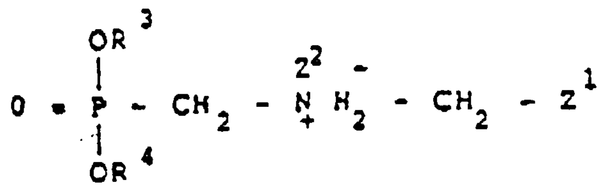

(Ia)

in which $Z^2$ is a compatible anion, capable of forming a salt;
$R^3$ and $R^4$ are identical or different and represent hydrogen atoms or lower alkyl or aryl groups, which can be substituted, or biphenyl groups;
$Z^1$ is a cyano group or a group $COOR^5$;
$R^5$ is a hydrogen atom or else is chosen from the lower alkyl, lower alkenyl and lower alkoxyalkyl groups; aryl groups containing 6 to 10 carbon atoms and optionally carrying 1 to 3 substituents chosen independently from the lower alkyl, lower alkoxy, halo, trifluoromethyl, nitro and cyano groups;
and at least one herbicide of the phenoxybenzoic type chosen from acifluorfen or the potassium or sodium salt of acifluorfen, characterised in that the herbicide of the phenoxybenzoic type/herbicide of the glyphosate type weight ratio is between 1/12 and 1/80.

2. Composition according to Claim 1, characterised in that the herbicide of the phenoxybenzoic type/herbicide of the glyphosate type weight ratio is between 1/15 and 1/50.

3. Composition according to Claim 1 or 2, characterised in that the compound of the phenoxybenzoic type is acifluorfen-sodium.

4. Composition according to one of Claims 1 to 3, characterised in that it is in the form of a ready-to-use mixture.

5. Process for the post-emergence treatment of weeds, consisting in applying to the latter an effective quantity of a herbicide of the glyphosate type and a quantity of a herbicide of the phenoxybenzoic type according to one of Claims 1 to 4, characterised in that the dose of herbicide of the glyphosate type is between 0.3 and 0.9 kg/ha, preferably between 0.4 and 0.8 kg/ha and advantageously between 0.5 and 0.7 kg/ha, and the dose of herbicide of the phenoxybenzoic type is between 0.005 and 0.1 kg/ha, preferably between 0.02 and 0.08 kg/ha, the herbicide of the phenoxybenzoic type/herbicide of the glyphosate type weight ratio being between 1/12 and 1/80, preferably between 1/15 and 1/50.

6. Composition based on a herbicide of the glyphosate type having a good resistance to leaching by rain, especially when it is present on plant leaves, characterised in that it is in accordance with any one of Claims 1 to 4.

7. Composition based on a herbicide of the glyphosate type having a strong activity with regard to plants which are at the end of the growth cycle and/or whose growth is slowing, characterised in that it is in accordance with any one of Claims 1 to 4.

8. Composition according to any one of Claims 1 to 4, which is intended to be diluted in water for the purpose of being applied to plants, characterised in that it comprises 10 % to 50 % by weight of the combination of the two active substances of formula (I) and of the phenoxybenzoic type, preferably 15 to 30 %.

**Patentansprüche**

1. Herbizides Mittel, enthaltend mindestens ein Herbizid des Glyphosat-Typs der Formel I

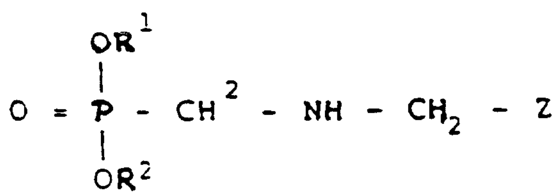

(I)

in der
Z eine Cyanogruppe oder COOR bedeutet;
R für ein Wasserstoffatom steht oder aus folgenden Gruppen ausgewählt ist: niedere Alkylgruppen, niedere Alkenyl- oder Alkoxyalkylgruppen; Arylgruppen mit 6 bis 10 Kohlenstoffatomen sowie gegebenenfalls 1 bis 3 Substituenten, die unabhängig voneinander aus niederen Alkylgruppen, niederen Alkoxygruppen, Halogen, Trifluormethyl, Nitro und Cyano ausgewählt sind; oder ein verträgliches Kation ist, das ein Salz bilden kann;
$R^1$ und $R^2$ gleich oder verschieden sind und für Wasserstoffatome stehen oder aus niederen Alkylgruppen, Arylgruppen, substituierten Arylgruppen oder Biphenyl ausgewählt sind oder für verträgliche Kationen stehen, die Salze bilden können;
oder das Herbizid des Glyphosat-Typs der Formel Ia

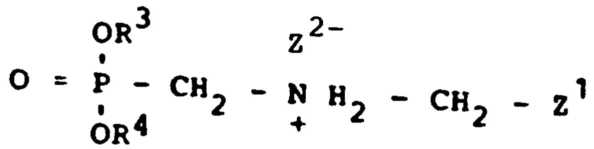

(Ia)

in der
$Z^2$ ein verträgliches Anion ist, das ein Salz bilden kann;
$R^3$ und $R^4$ gleich oder verschieden sind und für Wasserstoff oder niedere Alkylgruppen oder Arylgruppen, welche substituiert sein können, oder für eine Biphenylgruppe stehen;
$Z^1$ eine Cyanogruppe oder $COOR^5$ ist;
$R^5$ für ein Wasserstoffatom steht oder aus niederen Alkyl-, Alkenyl- oder Alkoxyalkylgruppen, Arylgruppen mit 6 bis 10 Kohlenstoffatomen, die gegebenenfalls 1 bis 3 Substituenten tragen, die unabhängig voneinander für eine niedere Alkyl- oder Alkoxy-, Halogen-, Trifluormethyl-, Nitro- und Cyanogruppe stehen, ausgewählt ist;
und mindestens ein Herbizid des Phenoxybenzoesäure-Typs, ausgewählt aus Acifluorfen oder dem Kalium- oder Natriumsalz von Acifluorfen,
dadurch gekennzeichnet, daß das Gewichtsverhältnis von Herbizid des Phenoxybenzoesäure-Typs zu Herbizid des Glyphosat-Typs 1:12 bis 1:80 beträgt.

2. Mittel nach Anspruch 1, dadurch gekennzeichnet, daß das Gewichtsverhältnis von Herbizid des Phenoxybenzoesäure-Typs zu Herbizid des Glyphosat-Typs 1:15 bis 1:50 beträgt.

3. Mittel nach Anspruch 1 oder 2, dadurch gekennzeichnet, daß die Verbindung vom Phenoxybenzoesäure-Typ das Acifluorfennatrium ist.

4. Mittel nach einem der Ansprüche 1 bis 3, dadurch gekennzeichnet, daß es ein gebrauchsfertiges Gemisch ist.

5. Verfahren zur Nachauflauf-Behandlung von Unkräutern, bei dem auf die Unkräuter eine wirksame Menge eines Herbizids des Glyphosat-Typs und eine Menge eines Herbizids des Phenoxybenzoesäure-Typs gemäß einem der Ansprüche 1 bis 4 aufgebracht wird, dadurch gekennzeichnet, daß die Dosis für das Herbizid des Glyphosat-Typs 0,3 bis 0,9 kg/ha, vorzugsweise 0,4 bis 0,8 kg/ha und vorteilhafterweise 0,5 bis 0,7 kg/ha, beträgt und die Dosis des Herbizids des Phenoxybenzoesäure-Typs 0,005 bis 0,1 kg/ha, vorzugsweise 0,02 bis 0,08 kg/ha, beträgt und das Gewichtverhältnis von Herbizid des Phenoxybenzoesäure-Typs zu Herbizid des Glyphosat-Typs 1:12 bis 1:80, vorzugsweise 1:15 bis 1:50, beträgt.

6. Mittel auf der Basis eines Herbizids des Glyphosat-Typs mit guter Beständigkeit gegenüber dem Abgewaschenwerden durch Regen, vor allem wenn es auf dem Blattwerk der Pflanzen vorhanden ist, dadurch gekennzeichnet, daß es einem der Ansprüche 1 bis 4 entspricht.

7. Mittel auf der Basis eines Herbizids des Glyphosat-Typs mit starker Aktivität gegenüber den Pflanzen am Ende des Vegetationszyklus und/oder mit verzögertem Wachstum, dadurch gekennzeichnet, daß es einem der Ansprüche 1 bis 4 entspricht.

8. Mittel nach einem der Ansprüche 1 bis 4, das vor dem Aufbringen auf die Pflanzen mit Wasser verdünnt wird, dadurch gekennzeichnet, daß es 10 bis 50 Gew.-%, vorzugsweise 15 bis 30 Gew.-%, der Kombination aus beiden Wirkstoffen der Formel (I) und des Phenoxybenzoesäure-Typs enthält.